(19) Europäisches Patentamt / European Patent Office / Office européen des brevets

(11) **EP 2 118 202 B1**

(12) **EUROPEAN PATENT SPECIFICATION**

(45) Date of publication and mention of the grant of the patent:
**22.06.2011 Bulletin 2011/25**

(51) Int Cl.:
***C08L 83/04*** (2006.01)   ***C08J 3/03*** (2006.01)
***C08J 9/00*** (2006.01)

(21) Application number: **08704526.6**

(22) Date of filing: **04.02.2008**

(86) International application number:
**PCT/JP2008/052203**

(87) International publication number:
**WO 2008/096882 (14.08.2008 Gazette 2008/33)**

(54) **SPONGE-FORMING LIQUID SILICONE-RUBBER COMPOSITION AND SILICONE RUBBER SPONGE MADE THEREFROM**

FLÜSSIGE SILIKON-GUMMI-ZUSAMMENSETZUNG ZUR FORMUNG EINES SCHWAMMS UND DARAUS HERGESTELLTER SILIKON-GUMMI-SCHWAMM

COMPOSITION DE CAOUTCHOUC SILICONE LIQUIDE FORMANT UNE ÉPONGE ET ÉPONGE EN CAOUTCHOUC SILICONE PRODUITE À PARTIR DE CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.02.2007 JP 2007027966**

(43) Date of publication of application:
**18.11.2009 Bulletin 2009/47**

(73) Proprietor: **Dow Corning Toray Co., Ltd.**
**Tokyo 100-0005 (JP)**

(72) Inventors:
• **SAKUMA, Atsushi**
**Ichihara-shi**
**Chiba 299-0108 (JP)**

• **TSUJI, Yuichi**
**Ichihara-shi**
**Chiba 299-0108 (JP)**

(74) Representative: **Russell, Lindsey et al**
**Elkington and Fife LLP**
**Thavies Inn House**
**3-4 Holborn Circus**
**London EC1N 2HA (GB)**

(56) References cited:
**EP-A- 1 627 900   EP-A- 1 724 308**

## Description

## Technical Field

The present invention relates to a sponge-forming liquid silicone-rubber composition and silicone rubber sponge formed from this composition.

## Background Art

Since a silicone rubber sponge is a material that possesses excellent resistance to heat, has weatherproofing properties, is light in weight, and has low thermal conductivity, this material finds applications in automotive parts, rollers and belts of image-forming apparatuses such as copiers, printers, various sealing elements, etc. Heretofore, silicone rubber sponges were manufactured from compositions that were compounded with various thermally decomposable organic foaming agents or various volatile components. However, the use of such compositions was associated with difficulties in molding and poor reproducibility of the shapes of the mold cavities.

Japanese Unexamined Patent Application Publication [hereinafter referred to as "Kokai"] 2005-62534 discloses a silicone rubber sponge-forming composition for manufacturing fixing rollers, the composition being of an addition-reaction curing type and containing water and a surfactant. However, the problem encountered with this composition was the difficulty in providing uniform and stable dispersion of water in the composition. Therefore, this composition was not easy to prepare and, once prepared, it was difficult to provide the composition with storage stability.

Kokai 2002-114860 discloses a silicone rubber sponge-forming composition obtained by preparing a water-absorbing polymer that contains water in a silicone-rubber composition that is cross-linkable by a hydrosilylation reaction. Furthermore, International Patent Application Publication WO 2005-085357 (equivalent to EP1724308) discloses an emulsion composition for preparation of a silicone rubber sponge that consists of an aqueous solution of a water-soluble polymer, a hydrosilylation-cross-linkable silicone-rubber composition, and an emulsifier. When such a sponge-forming composition is heated, it is cured, cross-linked, and forms a molded body of a water-containing silicone rubber that, after subsequent heating and removal of water, forms a silicone rubber sponge. However, since the aforementioned sponge-forming composition is compounded with a polymer during molding it contaminates the mold, impairs heat-resistant properties of the obtained sponge, or spoils appearance of the molded product. Furthermore, the pores of the obtained sponge body are insufficiently fine.

Kokai 2004-346248 (equivalent to US20070123828A1) discloses a silicone rubber emulsion composition comprising a hydrosilylation-curable silicone-rubber composition, water that contains smectite clay, and an emulsifier. However, this composition is characterized by a high coefficient of shrinkage of the molded sponge body and by poor reproducibility of the shape of the mold cavity. Furthermore, the pores of the obtained sponge body are insufficiently fine and have an insufficiently uniform distribution.

## Disclosure of Invention

It is an object of the present invention to provide a sponge-forming liquid silicone-rubber composition for obtaining a sponge body that has a reduced coefficient of shrinkage at molding, does not bleed out non-cross-linked components, and has fine, uniform, and continuous porosity.

The invention provides a sponge-forming liquid silicone-rubber composition comprising:

100 parts by mass of a diorganopolysiloxane (A) comprising: 0 to 90 parts by mass of a diorganopolysiloxane (A1) that has on alkenyl groups on both molecular terminals and does not have any alkenyl groups in molecular side chains; and 10 to 100 parts by mass of a diorganopolysiloxane (A2) that has two or more alkenyl groups in molecular side chains;

an organohydrogenpolysiloxane (B) that has in one molecule at least two silicon-bonded hydrogen atoms (this component is used in an amount such that 0.4 to 20 silicon-bonded hydrogen atoms contained in this component correspond to one alkenyl group in component (A));

10 to 250 parts by mass of a mixture (C) composed of water and inorganic thickener;

0.1 to 15 parts by mass of an emulsifier (D);

a hydrosilylation-reaction catalyst (E) (used in an amount sufficient for cross-linking the composition); and

0.001 to 5 parts by mass of a curing retarder (F).

The aforementioned sponge-forming liquid silicone-rubber composition may further comprise 20 or less parts by mass of a fine silica powder (G) per 100 parts by mass of component (A).

It is recommended that Component (C) is a mixture of water with smectite clay. It is also recommended that the molar ratio of silicon-bonded hydrogen atoms contained in component (B) to one mole of silicon-bonded alkenyl groups contained in component (A) ranges from 1.5 to 20.

The silicone rubber sponge of the invention is obtained by cross-linking and curing the aforementioned sponge-forming liquid silicone-rubber composition.

It is recommended that the aforementioned silicone rubber sponge has a coefficient of shrinkage after molding which is 10% or lower; the average diameter of pores ranges from 1 μm to 50 μm, and continuous porosity is equal to or greater than 90%. The aforementioned silicone rubber sponge can be used as a resilient material of fixing members of image-forming apparatuses, such as rollers or belts.

The silicone-rubber composition of the invention is efficient in that, as a result of cross-linking and curing, it can be formed into a silicone rubber sponge characterized by fine, uniform, and continuous porosity, as well as by a reduced coefficient of shrinkage of the obtained silicone rubber sponge. Furthermore, since during molding the obtained sponge body does not bleed out the non-cross-linked components, it does not contaminate the mold and does not spoil appearance. The aforementioned silicone rubber sponge obtained from the composition has a fine, uniform, and continuous porosity.

## Best Mode for Carrying Out the Invention

Component (A), which is one of the main components of the composition, comprises an alkenyl-containing diorganopolysiloxane having in its molecule silicon-bonded alkenyl groups. The aforementioned component (A) is composed of a diorganopolysiloxane (A1) that has alkenyl groups on both molecular terminals and does not have any alkenyl groups in molecular side chains; and a diorganopolysiloxane (A2) that has two or more alkenyl groups in molecular side chains. The ratio of constituent (A1) to constituent (A2) ranges from (0:100) to (90:10), preferably (0:100) to (75:25), and most preferably (10:90) to (50:50). The combination of constituents (A1) and (A2) improves the coefficient of shrinkage in the silicone rubber obtained from the silicone-rubber composition of the invention.

It is recommended that the diorganopolysiloxane of constituent (A1), which has alkenyl groups on both molecular terminals and does not have any alkenyl groups in molecular side chains, has a viscosity ranging from 0.1 to 100 Pa·s and preferably from 0.1 to 40 Pa·s at 25°C. The constituent (A1) may have small amount of hydroxyl group or organic groups other than alkenyl groups on molecular terminals. The siloxane skeleton of the organopolysiloxane of constituent (A1) may be linear or branched or may comprise a combination of both structures. However, it is preferable that this constituent is essentially a linear-chain diorganopolysiloxane, the main chain of which is composed of repeating diorganosiloxane units and both molecular terminals of which are capped with alkenyldiorganosiloxy groups.

The alkenyl groups of constituent (A1) may be represented by vinyl, allyl, propenyl, isopropenyl, butenyl, isobutenyl, pentenyl, hexenyl, heptenyl, or similar groups, of which vinyl groups are preferable. Organic groups other than silicon-bonded alkenyl groups of constituent (A1) may be exemplified by substituted or non-substituted monovalent hydrocarbon groups having 1 to 10 carbon atoms, and preferably 1 to 8 carbon atoms, such as methyl, ethyl, propyl, butyl, pentyl, hexyl, or similar alkyl groups; cyclopentyl, cyclohexyl, or similar cycloalkyl groups; phenyl, tolyl, xylyl, naphthyl, or similar aryl groups; benzyl, phenethyl, or similar aralkyl groups; 3,3,3-trifluoropropyl, 3-chloropropyl, or similar halogen-substituted alkyl groups. Most preferable are methyl groups.

It is recommended that the aforementioned diorganopolysiloxane (A2), which has two or more alkenyl groups in molecular side chains, have a viscosity of 0.1 to 100 Pa.s, preferably 0.1 to 40 Pa·s, at 25°C. The alkenyl groups of constituent (A2) may be contained not only in molecular side chains but may exist on the molecular terminals as well. The siloxane skeleton of the organopolysiloxane of constituent (A2) may have a linear or branched molecular structure or a combination of both. It is preferable that this constituent is essentially a linear-chain diorganopolysiloxane, the main chain of which is composed of repeating diorganosiloxane units and that both molecular terminals thereof be capped with vinyldiorganosiloxy groups or triorganosiloxy groups which dos not have an alkenyl group.

The alkenyl groups of constituent (A2) are the same as those of aforementioned constituent (A1). Furthermore, the aforementioned organic groups other than silicon-bonded alkenyl groups of constituent (A2) are the same as the aforementioned groups of constituent (A1).

Component (B) is an organohydrogenpolysiloxane that has in one molecule at least two silicon-bonded hydrogen atoms. This component is a cross-linking agent of the silicone-rubber composition of the invention. Silicon-bonded hydrogen atoms may assume positions on terminal siloxane units and/or on siloxane units in polymer chains. It is recommended that the aforementioned organohydrogenpolysiloxane comprise a linear-chain siloxane polymer which contains indispensable units of formula $RHSiO_{2/2}$ and/or $R_2XSiO_{1/2}$ (where R designates the same substituted or non-substituted monovalent hydrocarbon groups with 1 to 10 carbon atoms and preferably 1 to 8 carbon atoms as the aforementioned organic groups other than alkenyl groups contained in constituent (A), which are preferably methyl groups, and where X designates hydrogen atoms or groups designated by R) and arbitrary units of formula $R_2SiO_{2/2}$.

The sum of mole of silicon-bonded hydrogen atoms (i.e., SiH groups) contained in component (B) is equal to 0.4 to 20, preferably 0.4 to 5.0 per one mole of alkenyl group of component (A). Thus, in order to maintain the above ratio, the relative amount of aforementioned component (B) per 100 parts by mass of aforementioned component (A) should be optimally selected in the range of 1 to 1,000 parts by mass. From the viewpoint of decrease in compression set of a silicone rubber sponge formed from the silicone-rubber composition of the invention, it is recommended that the total amount of aforementioned hydrogen atoms (i.e., SiH groups) be in the range of 1.5 to 20, preferably 1.8 to 5 per one alkenyl group of component (A).

Mixture (C) of water and inorganic thickener is a component that is used for imparting porosity to the silicone rubber obtained by cross-linking and curing the silicone-rubber composition of the invention, i.e., for obtaining the product in the form of a silicone-rubber sponge. Component (C) should be added in the amount of 10 to 250 parts by mass, preferably 20 to 200 parts by mass, and most preferably 40 to 150 parts by mass per 100 parts by mass of component (A). If component (C) is added in the amount less than 10 parts by mass, it will be difficult to impart porosity to the silicone rubber obtained by cross-linking and curing the silicone-rubber composition, i.e., it will be difficult to obtain the product in a spongy form. If, on the other hand, the added amount of component (C) exceeds 250 parts by mass, this will impair the strength of the obtained silicone-rubber sponge.

The water that is present in component (C) is a constituent, which, when removed after cross-linking and curing the silicone-rubber composition of the invention, imparts porosity to the obtained silicone rubber, i.e., a spongy state. There are no special restrictions with regard to the type of water used in component (C) provided that it is pure. This may be a conventional tap water, well water, ion-exchanged water, distilled water, etc. In order to provide more stable dispersion of component (C) in component (A), the use of ion-exchanged water is preferable.

The thickener that is present in component (C) may comprise a natural or synthetic inorganic thickener which is used for making the component (C) more viscous. Examples of such a thickener are the following: bentonite or other natural or synthetic smectite clays consisting primarily of montmorillonite, hectolite, saponite, sauconite, videlite, nontronite, or similar clay minerals; as well as hydrophilic composite materials comprising the aforementioned thickeners and water-soluble organic polymers, such as an anionic polymer, e.g. polyacrylic acid or the like. The thickener can be used in an amount of 0.1 to 10 parts by mass, preferably 0.5 to 5 parts by mass per 100 parts by mass of water contained in component (C).

Preferable among the aforementioned thickeners are bentonites (montmorillonites), hectoliter clays, saponite clays, or similar smectite clays. These thickeners are recommended because they can increase viscosity of component (C) in a relatively small amount and reduce the amount of an emulsifier (D) needed, which is described later. The aforementioned smectite clays are exemplified by Smecton (trade mark of Kunimine Co., Ltd.) or Lucentite (trade mark of Corp Chemical Co., Ltd.) which is a product of hydrothermal synthesis, and by Kunipia (trade mark of Kunimine Co., Ltd.), Ben-Gel (trade mark of of Hojun Co., Ltd.), or Bentone (trade mark of Elementis Specialties Inc.), or Veegum (trade mark of Vanderbilt Co., Inc.) which is a natural purified product. Both of these products are readily available. From the viewpoint of better conditions for maintaining heat-resistant properties of the silicone rubber sponge, it is recommended that pH of the aforementioned smectite clays be in the range of 5.0 to 9.0.

The emulsifier of component (D) may be the same as conventional agents of this type and may be of an anionic, cationic, amphoteric, or a nonionic type. The following are specific examples of the aforementioned agents: glycerin fatty acid ester, polyglycerin fatty acid ester, sorbitane fatty acid ester, sucrose fatty acid ester, polyethyleneglycol fatty acid ester, polypropyleneglycol fatty acid ester, polyoxyethylene glycerin fatty acid ester, polyoxyethylenesorbitane fatty acid ester, a block copolymer of polyoxyethylene and polyoxypropylene, polyoxyethylenealkoxy ether, polyoxyethylenealkoxyphenyl ether, polyoxyethylene fatty acid amide, or similar nonionic surfactants; a graft copolymer of polysiloxane and polyoxyethylene, or similar nonionic surfactants comprising a organopolysiloxane; fatty acid amine salts, quadrennial ammonium salts, alkoxypyridinium salts, or similar cationic-type surfactants; higher fatty acid salt, higher alcohol sulfuric acid ester salt, alkylbenzene sulfate, alkylnaphthalene sulfate, polyethyleneglycolic acid ester salt, or similar anionic-type surfactants; or amphoteric surfactants of a carboxybetaine type or a glycine type. Among these, most preferable are nonionic surfactants because they exert minimal influence on the hydrosilylation reaction when component (E), which is described below, is used as a catalyst.

The aforementioned emulsifiers can be used individually or in combination of two or more. The HLB value of the emulsifier (which in case of two or more emulsifiers is calculated as a weight-average HLB value) should be in the range of 1 and 10, preferably in the range of 1.5 to 6, and most preferably in the range of 3.5 to 6. The emulsifier (D) should be used in an amount of 0.1 to 15 parts by mass and preferably 0.2 to 3 parts by mass per 100 parts by mass of component (A).

The hydrosilylation catalyst of component (E) may comprise one or more catalysts selected from the group consisting of a platinum-type catalyst, a palladium-type catalyst, and a rhodium-type catalyst. Most preferable are the following: chloroplatinic acid, alcohol-modified chloroplatinic acid, coordination compounds of chloroplatinic acid and olefin, vinylsiloxane or acetylene compounds, tetrakis (triphenylphosphine) palladium, chlorotris (triphenylphosphine) rhodium, etc. Most preferable are platinum-type compounds. As a catalyst, component (E) should be used in an effective quantity (so-called catalytic quantity). More specifically, in terms of weight units, component (E) should be used in the amount of 0.01 to 500 ppm, preferably 0.1 to 100 ppm, in terms of weight recalculated for metallic elements of the catalyst per total weight of aforementioned components (A) and (B).

Curing retarder (F) is used for adjusting the speed of curing and operational time for forming of the sponge-forming liquid silicone-rubber composition. Specific examples of this component are the following: 3-methyl-1-butyn-3-ol, 3,5-dimethyl-1-hexyn-3-ol, phenylbutynol, 1-ethynyl-1-cyclohexanol, or similar alcohol derivatives having triple carbon-carbon bonds; 3-methyl-3-penten-1-yne, 3,5-dimethyl-3-hexen-1-yne, or similar enyne compounds; tetramethyltetravinylcyclotetrasiloxane, tetramethyltetrahexenylcyclotetrasiloxane, or similar alkenyl-containing low-molecular-weight siloxanes; methyl-tris (3-methyl-1-butyn-3-oxy) silane, and vinyl-tris-(3-methyl-1-butyn-3-oxy) silane, or similar alkyn-containing silanes.

The amount in which component (F) is used is selected with reference to the form and method of use of the sponge-forming liquid silicone-rubber composition; however, in general, it may be used in an amount of 0.001 to 5 parts by mass per 100 parts by mass of component (A).

In order to improve strength of the silicone-rubber sponge obtained from the sponge-forming liquid silicone-rubber composition of the invention, the composition may be further compounded with fine silica powder (G) which is used for reinforcement. There are no special restrictions with regard to component (G), but it may be recommended to use fumed silica or precipitated silica. If necessary, this fine silica powder can be surface-treated with a linear-chain organopolysiloxane, cyclic organopolysiloxane, hexamethyldisilazane, or various organosilanes. The specific surface area of the aforementioned reinforcement fine silica powders may be preferably in the range of 50 to 350 $m^2$/g and more preferably in the range of 80 to 250 $m^2$/g. The value of the specific surface area is determined by the BET-absorption method.

Component (G) may be used preferably in the amount of 20 parts by mass or less (i.e., in the range of 0 to 20 parts by mass), more preferably 0 to 15 parts by mass, and most preferably 0 to 10 parts by mass.

The silicone-rubber composition can be further combined with other known additives such as fumed titanium oxide or similar reinforcement fillers; crushed quartz, crystalline silica, diatomaceous earth, asbestos, aluminosilic acid, iron oxide, zinc oxide, calcium carbonate, or a similar non-reinforcement filler. The aforementioned fillers surface-treated with organosilane, organopolysiloxane, or similar organosilicon compounds; or acetylene black, furnace black, channel black, or similar carbon blacks. If necessary, the composition may be further combined with pigments, heat-resistant agents, flame-retardants, mold-release agents, plasticizers, acid receptors, non-functional silicone oils, or other conventional additives generally added to silicone-rubber compositions. The silicone-rubber composition can be further combined with other known additives such as antiseptics or anti-rust agents.

The silicone-rubber composition of the invention is prepared by mixing the aforementioned components, if necessary with various additives, by uniformly mixing the components with the use of conventional mixing equipment. Such equipment can be exemplified by mixers such as a homo-mixer, pedal mixer, homo-dispenser, colloidal mill, or vacuum-agitator. There are no special restrictions with regard to the equipment used provided that this equipment can ensure sufficient dispersion of components (C) and (D) in component (A).

For example, the silicone-rubber composition consisting of components (A) through (F) or components (A) through (G) can be prepared by the following method. When component (G) is used, first a silica master batch is prepared by compounding component (G) with a part of component (A), and then the remaining part of component (A) is mixed with the rest of the components.

Components (A), (B), (C), (D), (F), and, if necessary, (G) are loaded into a mixer and stirred and mixed for a predetermined time, and component (E) is added only directly prior to use of the composition for molding with a static mixer, a dynamic mixer, and/or other kind of mixing equipment. Components (A), (C), (D), (E), and, if necessary, (G) are loaded into a mixer and are mixed for a predetermined time, and components (B) and (F) are added only directly prior to use of the composition for molding with a static mixer, a dynamic mixer, and/or other kind of mixing equipment. Components (A), (C), (D), and, if necessary, (G) are loaded into a mixer and are stirred and mixed for a predetermined period of time, and components (B), (E), and (F) are added only directly prior to use of the composition for molding with a static mixer, a dynamic mixer, and/or other kind of mixing equipment.

From the viewpoint of storage stability, the sponge-forming liquid silicone-rubber composition of the invention can be prepared by mixing the following versions of three component compositions directly prior to use of the composition for molding with a static mixer, a dynamic mixer, and/or other kind of mixing equipment:

(I) a component composition that contains components (A), (C), (D), (E), and, if necessary, (G) but that does not contain components (B) and (F), (II) a component composition that contains components (A), (C), (D), (F), and, if necessary, (G), but that does not contain components (B) and (E), and (III) a component composition that contains component (B) but that does not contain components (C), (E), and (F); or (I) a component composition that contains components (A), (C), (D), (E), and, if necessary, (G), but that does not contain components (B) and (F), (II) a component composition that contains component (F) but that does not contain components (B), (C), and (E), and (III) a component composition that contains component (B) but that does not contain components (C), (E), and (F). If necessary, the sponge-forming liquid silicone-rubber composition can be prepared for storage from the following two component compositions for mixing directly prior to molding with a static mixer, a dynamic mixer, and/or other kind of mixing equipment: (I) a component composition that contains components (A), (C), (D), (F), and, if necessary, (G), but that does not contain component (B) and (E) and (II) a component composition that contains components (B) and (E) but that does not contain components (C) and (F).

The sponge-forming liquid silicone-rubber composition of the invention can be molded into a silicone-rubber sponge by various methods. For example, the silicone-rubber composition of the invention can be injected into the cavity of a mold held under pressure at a temperature of 100°C or less, preferably in the range of 50 to 90°C, molded into a water-containing silicone-rubber body, extracted from the mold, subjected to heating at 120 to 250°C for removal of water, and thus turned into a silicone-rubber sponge having fine, uniformly distributed, and continuous pores. According to another method, the silicone-rubber composition of the invention can be extruded through the nozzle into a rod-like body which is cured by inserting the body into hot water at a temperature of 80 to 100°C, thus producing a silicone-rubber sponge in a string-like form by drying the cured body in a flow of hot air. According to another method, a silicone-rubber spongy sheet formed on a peelable substrate can be obtained by the following steps: (i) the silicone-rubber composition of the invention is applied as a coating onto a resin film or a similar peelable substrate, (ii) the coating is then cured by heating to a temperature of 50 to 120°C with subsequent removal of water by drying in a flow of hot air. Alternatively, a silicone-rubber sponge-coating web can be obtained by the following steps: (i) the silicone-rubber composition of the invention is applied onto a synthetic fibrous material or fiberglass cloth as a coating, (ii) and then the composition is cured by heating to a temperature of 50 to 120°C with subsequent removal of water by heating in a flow of hot air, or heating and curing the composition while removing water therefrom.

Since the silicone-rubber composition of the invention is characterized by reduced shrinkage after molding, by excellent reproducibility of the mold-cavity shape, and by the ability to form a sponge body with fine and uniformly distributed and continuous pores, it is suitable for use as a resilient material for fixing rollers used in image-forming apparatuses. When this material is used for fixing rollers, a layer of a silicone-rubber sponge is formed by cross-linking and curing the aforementioned silicone-rubber composition on a core shaft. In this case, the material of the core shaft and dimensions thereof can be appropriately selected, depending on the type of the roller. When the sponge body is used as a fixing belt, a layer of silicone-rubber sponge is formed by cross-linking and curing the aforementioned silicone-rubber composition on the surface of an endless belt, and, in this case, the material and dimensions of the endless belt can be selected, depending on the type of belt onto which the coating is to be applied.

The outer periphery of the layer of the aforementioned silicone-rubber sponge can be further coated with a fluororesin layer or a fluororubber layer. The fluororesin layer can be applied onto the aforementioned silicone-rubber layer in the form of a fluororesin coating material or in the form of a fluororesin tube. The fluororesin coating material can be exemplified by latex of polytetrafluoroethylene resin (PTFE), Daiel latex (the product of Daikin Industries Co., Ltd., a fluorolatex). The fluororesin tube can be obtained as a commercially available material made e.g., from polytetrafluoroethylene (PTFE), a copolymer resin of tetrafluoroethylene and perfluoroalkylvinylether (PFA), a copolymer resin of fluoroethylene and polypropylene (PEP), polyfluorovinylydene (PVDF), or polyfluorovinyl resin of which PFA is preferable.

The thickness of the silicone-rubber layer can be optionally selected and in general may be preferably in the range of 0.05 to 80 mm, and more preferably in the range of 0.1 to 50 mm. It is recommended, however, to select the thickness of this layer so as to more efficiently use the rubber-like resiliency of the silicone rubber. The fluororesin layer that is formed on the top of the silicone-rubber layer may have a thickness preferably in the range of 5 to 200 $\mu$m, more preferably 10 to 100 $\mu$m.

In order to provide excellent reproducibility of the mold cavity by the sponge, it is recommended that the sponge be obtained with coefficient of shrinkage equal to or greater than 10%. The coefficient of shrinkage is determined by the following formula:

$$\text{Coefficient of shrinkage (\%)} = (L_0 - L_1)/L_0 \times 100,$$

wherein $L_0$ is the length of the mold cavity, and $L_1$ is the length of the sponge specimen molded in the aforementioned mold.

In order to provide the sponge of the present invention with minimal thermal deformation (thermal expansion) and with excellent post-deformation recovery, it is recommended that the sponge be obtained with continuous porosity equal to or greater than 90%. For testing the sponge with regard to continuity of porosity, it is necessary to immerse the sponge into water and to decompress it in order the air of the pores is replaced by water. Percentage of pores that have continuous porosity relative to all pores of the sponge is determined by means of the following formula, assuming that density of water is 1.0 g/cm$^3$:

$$\text{Continuous Porosity (\%)} = \{(\text{mass of the absorbed water})/(\text{volume of air-filled pores})\}/100$$

The aforementioned volume of air-filled pores mentioned in the above formula, in turn, is determined from the formula given below:

$$\text{Volume of air-filled pores (cm}^3) = \{(\text{sponge mass})/(\text{sponge density})\} - \{(\text{sponge mass})/(\text{rubber density})\},$$

where rubber density is determined as a value obtained by measuring density of a molded body of a silicone rubber obtained by cross-linking and curing the silicone rubber composition, which is the same as mentioned above but without components (C) and (D), i.e., aforementioned rubber density is in fact a density of sponge-pore walls.

Examples

The invention will now be described more specifically with reference to practical and comparative examples. It is understood, however, that these examples do not limit the scope of application of the invention. In all examples, values of viscosity were measured at 25°C.

<Storage Stability>

This property was evaluated by retaining the composition for one week at 25°C, and then visually observing it with regard to preserving uniformity of mix and separation of a water phase. When the composition preserved uniformity of mixture, storage stability was evaluated as "stable". When separation of a water phase was observed, storage stability was evaluated as "separation".

<Density>

Density was measured in accordance with the provisions of JIS K6268.

<Hardness (Asker C)>

Hardness was measured in accordance with JIS K7312 as type C hardness measures on a type C hardness tester. A specimen comprised a stack of two 6 mm-thick test pieces.

<Tensile Strength and Elongation>

These properties were measured in accordance with JIS K6251.

<Compression set>

This characteristic was measured in accordance with JIS K6262 as a compression set after 22 hours of 25% compression at 180°C.

<Porosity Condition>

Cross-section of the compression set specimen was visually observed with regard to uniformity of pores across the entire cross-sectional areas. When existence of localized excessively large pore was observed in the cross section, uniformity of pores was evaluated as "inhomogeneous". When a large amount of excessively large pore in the cross section and development of cracks on the surface of the sample were observed, uniformity of pores was evaluated as "punctured". When there was no such excessively large pore and pores were uniformly found in the cross-section, uniformity of pores was evaluated as "uniform".

<Average Pore Size>

The hardness-measurement specimen was cut across by a razor blade, the central portion of the cut surface was observed under a scanning-type electron microscope, and the diameter of pores was calculated as an average (arithmetic average) of 200 to 300 pores measured on an area of 0.04 mm$^2$. The maximum diameter of the pores observed during measurement of the average diameter was also measured. When a large amount of flat-layered pores which were formed by interconnection of pores were observed making it difficult to measure the pore diameter, the pores were evaluated as "flat-layered" and were excluded from measurement of the average and maximum pore diameters.

<Coefficient of Shrinkage>

This characteristic was determined by measuring the length of the hardness-measurement specimen obtained by molding the composition in a mold having a length of 70 mm, a width of 50 mm, and a thickness of 6 mm, and by inserting the measured value into the following formula:

$$\text{Coefficient of Shrinkage (\%)} = \{(70 - \text{measured value (mm)})/70\} \times 100.$$

<Percentage of Continuous Porosity>

Mass and density of the silicone-rubber sponge specimen intended for testing compression set was measured, and the volume of air-filled pores was determined by inserting the measured values into the formula given below. Rubber density used in the above formula corresponded to the density of the compression set test specimen obtained by cross-linking and curing the silicone-rubber composition prepared by the same method as described above, except that components (C) and (D) were excluded from the composition.

$$\text{Volume of air-filled pores (cm}^3\text{)} = \{(\text{sponge mass})/(\text{sponge density})\} - \{(\text{sponge mass})/(\text{rubber density})\}$$

A sponge specimen was retained in water for 3 min. under a reduced pressure of -750 mmHg for absorbing water, the mass of the absorbed water was measured, and then continuous porosity was determined based on the formula given below by inserting the water-density value of 1.0 g/cm$^3$.

$$\text{Continuous porosity (\%)} = \{(\text{mass of absorbed water})/(\text{Volume of air-filled pores})\}/100$$

<Mold Fouling>

The mold used for molding the shrinkage-test specimen was cooled, and the presence of deposits was determined by touching the cavity surface with a finger. The condition was evaluated as "clean" when molding did not cause any changes. The condition was evaluated as "fouled" when an oily deposit was revealed.

[Preparation Example 1]

The following components were loaded into a Ross mixer and uniformly mixed at room temperature: 100 parts by mass of a dimethylpolysiloxane having viscosity of 40,000 mPa·s and capped at both molecular terminals with dimethylvinylsiloxy groups; 40 parts by mass of fumed silica having BET specific surface area of 225 m$^2$/g; 7 parts by mass of hexamethyldisilazane; 2 parts by mass of water; and 0.2 part by mass of a copolymer of a methylvinylsiloxane and dimethylsiloxane having viscosity of 20 mPa·s and capped at both molecular terminals with dimethylhydroxysiloxy groups (vinyl-group content = about 10.9 mass %). Upon completion of mixing, the mixture was heat treated for 2 hours at 200°C and under a reduced pressure. As a result, a flowable silica master batch was obtained.

[Preparation Example 2]

A homo-mixer was loaded with 1 part by mass of a smectite clay (organic-polymer-composite pure bentonite (hydrophilic), the product of Hojun Co., Ltd.) (pH 6.5) and 99 parts by mass of ion-exchange water. After uniform mixing, a mixture (c-1) of water with an inorganic thickener was obtained.

[Preparation Example 3]

A disper-mixer was loaded with 1 part by mass of an aqueous polymer (sodium acrylate, the product of Nakalai Tesque Co., Ltd.) and 99 parts by mass of ion-exchange water. After uniform mixing a mixture (c-2) of water with an organic thickener was obtained.

[Preparation Example 4]

A disper-mixer was loaded with 3 parts by mass of an aqueous polymer (sodium carboxymethylcellulose, the product ofNakalai Tesque Co., Ltd.] and 97 parts by mass of ion-exchange water. After uniform mixing a mixture (c-3) of water with an organic thickener was obtained.

[Practical Examples 1 to 5, Comparative Examples 1 to 5]

The silica master batch, component (A), component (C), component (D), and other starting materials were loaded in proportions shown in Table 1 into a homo-mixer (the product of Tokushu Kika Co., Ltd.) and were uniformly mixed at 25°C. A part of the obtained mixture was stored, and storage stability was evaluated. Following this, the obtained mixture was combined with component (B), component (E), and component (F), and de-aerated. As a result, a sponge-forming liquid silicone rubber composition was obtained. The obtained composition was cross-linked and cured in a compression molding machine for 10 min. at 90°C for obtaining several hydroscopic test specimens. These specimens were maintained for 4 hours at 200°C and held in a free state for removal of water. As a result, silicone-rubber sponge specimens were produced. These specimens were used for measuring density, hardness, tensile strength, elongation, permanent compression deformations, shrinkage, and continuous porosity. The results of the measurements are shown in Table 1.

Table 1

| | | | Practical Examples | | | | | Comparative Examples | | | | |
|---|---|---|---|---|---|---|---|---|---|---|---|---|
| | | | 1 | 2 | 3 | 4 | 5 | 1 | 2 | 3 | 4 | 5 |
| Silica Master Batch | | | 10 | | 10 | 10 | 17 | 30 | 40 | 40 | 50 | 40 |
| A | A1 | a-1 | | 17 | | | 38 | 70 | 60 | 60 | 50 | 60 |
| | A2 | a-2 | 90 | 83.5 | 90 | 90 | 35 | | | | | |
| | A2 | a-3 | | | | | 10 | | | | | |
| B | | b-1 | 1.65 | 1.79 | 3.31 | 6.11 | | 1.14 | 1.06 | 1.66 | 1.43 | 1.66 |
| | | b-2 | | 1.61 | | | | | | | | |
| | | b-3 | | | | | 6.36 | | | | | |
| C | | c-1 | 100 | 100 | 100 | 100 | 100 | 100 | 100 | | | |
| | | c-2 | | | | | | | | 50 | 50 | 50 |
| | | c-3 | | | | | | | | 50 | 50 | 50 |
| D | | d-1 | 0.5 | 0.5 | 0.5 | 0.5 | 0.7 | 0.5 | 0.3 | | | |
| | | d-2 | | | | | | | 0.7 | | | |
| | | d-3 | | | | | 0.1 | | | 3 | 3 | 3 |
| | | d-4 | | | | | | | | 1 | 1 | 1 |
| E Hydrosilylation catalyst | | | 0.25 | 0.25 | 0.25 | 0.25 | 0.25 | 0.25 | 0.25 | 0.25 | 0.25 | 0.25 |

(continued)

| | Practical Examples | | | | | Comparative Examples | | | | |
|---|---|---|---|---|---|---|---|---|---|---|
| | 1 | 2 | 3 | 4 | 5 | 1 | 2 | 3 | 4 | 5 |
| F Curing retarder master batch | 2.5 | 0.75 | 2.5 | 2.5 | 2.5 | 2.5 | 2.5 | 5 | 2 | 5 |
| Silicone resin | | 8 | | | | | | | | |
| Pigment master batch | 0.3 | 1 | 0.3 | 0.3 | 0.3 | 0.1 | 0.1 | 0.3 | 0.3 | 0.3 |
| Antiseptic 1 | 0.3 | | 0.3 | 0.3 | | 0.3 | 0.3 | 0.3 | | |
| Antiseptic 2 | 0.1 | | 0.1 | 0.1 | | 0.1 | 0.1 | 0.1 | | |
| Antiseptic 3 | 0.1 | | 0.1 | 0.1 | | 0.1 | 0.1 | 0.1 | | |
| SiH group/vinyl group ratio | | 1.5 | 2 | 3 | 4 | 1 | 1 | 1.5 | 1.5 | 1.4 |
| HUB | 4.3 | 4.3 | 4.3 | 4.3 | 3.3 | 4.3 | 2.55 | 7.6 | 7.6 | 7.6 |
| Storage stability | Stable | | | | | Separation | | Stable | | |
| Density (g/cm$^3$) | 0.58 | 0.58 | 0.58 | 0.58 | 0.57 | - | 0.61 | 0.6 | 0.62 | 0.76 |
| Hardness (Asker C) 6 mm | 17 | 15 | 22 | 21 | 26 | - | 27 | 18 | 18 | 18 |
| Tensile strength (MPa) | 0.3 | 0.3 | 0.3 | 0.3 | 1 | - | 0.4 | 0.5 | 0.7 | 0.2 |
| Elongation (%) | 91 | 80 | 85 | 81 | 145 | - | 150 | 330 | 300 | 100 |
| Compression set (%) | 65 | 40 | 26 | 16 | 35 | - | 58 | 81 | 82 | 57 |
| Porosity condition | Uniform | | | | | Puncture | Inhomogeneous | | | |
| Average pore size ($\mu$m) | 7 | 7 | 7 | 7 | 7 | - | Flat-layered | 30 | 30 | 30 |
| Maximum pore size ($\mu$m) | 30 | 30 | 30 | 30 | 30 | - | - | 100 | 150 | 100 |
| Coefficient of shrinkage (%) | 4.5 | 4.5 | 4.5 | 4.3 | 4.5 | - | 16.7 | 4.4 | 4.5 | 4.5 |
| Continuous porosity (%) | 100 | 100 | 100 | 100 | 100 | - | 40 | 100 | 100 | 76 |
| Mole fouling | Clean | | | | | - | Clean | Fouled | | |

The content of the table in interpreted below.

Silica master Batch

This is the silica master batch prepared in Preparation Example 1. Content of fumed silica is about 27 mass %.

[Component A]

Constituent A-1

a-1: dimethylpolysiloxane having a viscosity of 2,000 mPa·s and capped at both molecular terminals with dimethylvinylsiloxy groups; content of vinyl groups: 0.23 mass %. Constituent A-2
a-2: copolymer of methylvinylsiloxane and dimethylsiloxane having a viscosity of 7,500 mPa.s and capped at both molecular terminals with dimethylvinylsiloxy groups; content of vinyl groups: 0.31 mass %
a-3: copolymer of methylvinylsiloxane and dimethylsiloxane having a viscosity of 350 mPa·s and capped at both molecular terminals with dimethylvinylsiloxy groups; content of vinyl groups: 1.17 mass %

[Component B]

b-1: copolymer of methylhydrogensiloxane and dimethylsiloxane having a kinematic viscosity of 5.0 $mm^2/s$ and capped at both molecular terminals with trimethylsiloxy groups; content of silicon-bonded hydrogen atoms: about 0.74 mass %

b-2: copolymer of methylhydrogensiloxane and dimethylsiloxane having a kinematic viscosity of 15.0 $mm^2/s$ and capped at both molecular terminals with trimethylsiloxy groups; content of silicon-bonded hydrogen atoms: about 0.82 mass %

b-2: copolymer of methylhydrogensiloxane and dimethylsiloxane having a kinematic viscosity of 63.0 $mm^2/s$ and capped at both molecular terminals with trimethylsiloxy groups; content of silicon-bonded hydrogen atoms: about 0.70 mass %

[Component C]

c-1: mixture of water with the inorganic thickener obtained in Preparation Example 2; smectite clay content: 1.0 mass %

c-2: mixture of water with the inorganic thickener obtained in Preparation Example 3; sodium acrylate content: 1.0 mass %

c-3: mixture of water with the inorganic thickener obtained in Preparation Example 4; content of carboxymethylcellulose: 3.0 mass %

[Component D]

d-1: nonionic surfactant (sorbitane fatty acid ester; trademark "Rheodol SP-01OV", product of Kao Chemical Co., Ltd.); HLB 4.3

d-2: nonionic surfactant (sorbitane fatty acid ester; trademark "Rheodol SP-O30V", product of Kao Chemical Co., Ltd.); HLB 1.8

d-3: nonionic surfactant (polypropyleneglycol fatty acid ester; trademark "Kaohomotex SP-200V"; product of Kao Chemical Co., Ltd.); HLB 3.,0

d-4: nonionic surfactant (polyoxyethylene fatty acid ester; trademark "Ionet DL-200", Sanyo Chemical Industries Co., Ltd.); HLB 6.6

d-5: nonionic surfactant (polyoxyethylene fatty acid ester; trademark "Ionet DO-600", Sanyo Chemical Industries Co., Ltd.); HLB 10.4

[Component E]

Platinum-type catalyst: 1,3-divinyltetramethyl disiloxane solution of a platinum complex of divinyltetramethyldisiloxane; metallic-platinum content: 4000 ppm

[Component F]

Curing retarder: mixture of 2 parts by mass of ethynyl cyclohexanol with 98 parts by mass of dimethylpolysiloxane having a viscosity of 10,000 mPa·s and capped at both molecular terminals with dimethylvinylsiloxy groups.

[Other Components]

[Silicone Resin]

Polyorganosiloxane of formula $(Me_3SiO_{1/2})_n$ $(Me_2ViSiO_{1/2})_m$ $(SiO_{4/2})_r$ (where Me designates a methyl group, and Vi designate a vinyl group); number-average molecular weight: 4300; vinyl-group content: 1.9 mass %; $(n+m)/r = 0.71$.

[Pigment Master Batch]

40 parts by mass of ferric oxide (trademark "Byferrox", the product of Bayer A.G.) and 60 parts by mass of dimethylpolysiloxane having a viscosity of 10,000 mPa·*s and capped at both molecular terminals with dimethylvinylsiloxy groups.

[Antiseptic]

Antiseptic 1: methyl p-hydroxybenzoate (trademark "OXYBEN E, the product of Wako Pure Chemical Industries, Ltd.)
Antiseptic 2: ethyl p-hydroxybenzoate (trademark "OXYBEN E, the product of Wako Pure Chemical Industries, Ltd.)
Antiseptic 3: propyl p-hydroxybenzoate (trademark "OXTBEN P the product of Wako Pure Chemical Industries, Ltd.)

[SiH Group/Vinyl Group Ratio]

The ratio of silicon-bonded hydrogen atoms (i.e., SiH groups) contained in component (B) to 1 mole of silicon-bonded vinyl groups contained in component (A).

**Industrial Applicability**

The above-described silicone-rubber composition of the present invention possesses excellent moldability, and, when molded, forms a silicone-rubber sponge with fine, uniform, and continuous pores. Therefore, the composition is suitable for forming resilient rollers and belts of electrophotographic devices, laser-beam printers, facsimile machines, or similar image-reproducing apparatuses. The composition can be used for manufacturing spongy heat insulating materials, sound-absorbing materials, cushions, packings, gaskets, pads, or similar spongy materials suitable for use under high-temperature conditions. In particular, the composition of the invention is suitable for manufacturing fixing rollers and belts of copying machines which fix toner images on transfer media under the effect of applied heat and pressure.

**Claims**

1. A sponge-forming liquid silicone-rubber composition comprising:

   100 parts by mass of a diorganopolysiloxane (A) comprising: 0 to 90 parts by mass of a diorganopolysiloxane (A1) that has alkenyl groups on both molecular terminals and does not have any alkenyl groups in molecular side chains; and 10 to 100 parts by mass of a diorganopolysiloxane (A2) that has two or more alkenyl groups in molecular side chains;
   an organohydrogenpolysiloxane (B) that has in one molecule at least two silicon-bonded hydrogen atoms (this component is used in an amount such that 0.4 to 20 silicon-bonded hydrogen atoms contained in this component correspond to one alkenyl group in component (A));
   10 to 250 parts by mass of a mixture (C) composed of water and an inorganic thickener; 0.1 to 15 parts by mass of an emulsifier (D);
   a hydrosilylation-reaction catalyst (E) (used in an amount sufficient for cross-linking the composition); and
   0.001 to 5 parts by mass of a curing retarder (F).

2. The sponge-forming liquid silicone-rubber composition according to Claim 1 further comprising 20 or less parts by mass of a fine silica powder (G) per 100 parts by mass of component (A).

3. The sponge-forming liquid silicone-rubber composition according to Claims 1 or 2, wherein component (C) is a mixture of water with a smectite clay.

4. The sponge-forming liquid silicone-rubber composition according to Claim 3, wherein the smectite clay is a hydrophilic composite material comprising a water-soluble organic polymer and a smectite clay.

5. The sponge-forming liquid silicone-rubber composition according to any Claim from 1 to 3, wherein the molar ratio of silicon-bonded hydrogen atoms contained in component (B) to one mole of silicon-bonded alkenyl group contained in component (A) ranges from 1.5 to 20.

6. A silicone rubber sponge obtained by cross-linking and curing the sponge-forming liquid silicone-rubber composition according to any of Claims 1 to 5.

7. The silicone rubber sponge of Claim 6, wherein the coefficient of shrinkage after molding is 10% or less.

8. The silicone rubber sponge of Claim 7, wherein the average diameter of pores ranges from 1 $\mu$m to 50 $\mu$m and wherein continuous porosity is equal to or greater than 90%.

9. Use of the silicone rubber sponge according to any of Claims 6 to 8 as a resilient material of a fixing member of an image-forming apparatus.

10. Use of the silicone rubber sponge according to Claim 9, wherein the aforementioned fixing member of an image-forming apparatus is a roller or a belt.


**Patentansprüche**

1. Schwammbildende flüssige Siliconkautschukzusammensetzung, die enthält:

   100 Masseteile eines Diorganopolysiloxans (A), enthaltend 0 bis 90 Masseteile eines Diorganopolysiloxans (A1), das Alkenylgruppen an beiden Molekülenden aufweist und keine Alkenylgruppen in molekularen Seitenketten aufweist, und 10 bis 100 Masseteile eines Diorganopolysiloxans (A2), das zwei oder mehr Alkenylgruppen in molekularen Seitenketten aufweist;
   ein Organowasserstoffpolysiloxan (B), das in einem Molekül mindestens zwei siliciumgebundene Wasserstoffatome aufweist (diese Komponente wird in einer Menge verwendet, so dass 0,4 bis 20 siliciumgebundene Wasserstoffatome, die in dieser Komponente enthalten sind, einer Alkenylgruppe in Komponente (A) entsprechen);
   10 bis 250 Masseteile einer Mischung (C), die aus Wasser und einem anorganischen Verdickungsmittel besteht;
   0,1 bis 15 Masseteile eines Emulgators (D); einen Hydrosilylierungsreaktionskatalysator (E) (der in einer Menge verwendet wird, die ausreicht, um die Zusammensetzung zu vernetzen) und
   0,001 bis 5 Masseteile eines Härtungsverzögerers (F).

2. Schwammbildende flüssige Siliconkautschukzusammensetzung gemäß Anspruch 1, die ferner 20 oder weniger Masseteile eines feinen Siliciumdioxidpulvers (G) pro 100 Masseteile Komponente (A) enthält.

3. Schwammbildende flüssige Siliconkautschukzusammensetzung gemäß Anspruch 1 oder 2, worin Komponente (C) eine Mischung aus Wasser mit einem Smektitton ist.

4. Schwammbildende flüssige Siliconkautschukzusammensetzung gemäß Anspruch 3, worin der Smektitton ein hydrophiles Verbundmaterial ist, das ein wasserlösliches organisches Polymer und einen Smektitton enthält.

5. Schwammbildende flüssige Siliconkautschukzusammensetzung gemäß einem der Ansprüche 1 bis 3, worin das Molverhältnis von siliciumgebundenen Wasserstoffatomen, die in Komponente (B) enthalten sind, zu einem Mol siliciumgebundener Alkenylgruppen, die in Komponente (A) enthalten sind, von 1,5 bis 20 reicht.

6. Siliconschwammgummi, das durch Vernetzen und Härten der schwammbildenden flüssigen Siliconkautschukzusammensetzung gemäß einem der Ansprüche 1 bis 5 erhalten wird.

7. Siliconschwammgummi nach Anspruch 6, wobei der Koeffizient der Schwindung nach Formgebung 10% oder weniger beträgt.

8. Siliconschwammgummi nach Anspruch 7, wobei der durchschnittliche Durchmesser der Poren von 1 $\mu$m bis 50 $\mu$m reicht und wobei die kontinuierliche Porosität größer oder gleich 90 % ist.

9. Verwendung des Siliconschwammgummis gemäß einem der Ansprüche 6 bis 8 als elastisches Material eines Fixierelements einer bilderzeugenden Vorrichtung.

**10.** Verwendung des Siliconschwammgummis gemäß Anspruch 9, wobei das zuvor erwähnte Fixierelement einer bilderzeugenden Vorrichtung eine Walze oder ein Band ist.

**Revendications**

**1.** Composition de caoutchouc siliconé liquide formant une éponge comprenant :

100 parties en masse d'un diorganopolysiloxane (A) comprenant : 0 à 90 parties en masse d'un diorganopolysiloxane (A1) qui a des groupes alcényle sur les deux extrémités de la molécule et n'a aucun groupe alcényle dans les chaînes latérales de la molécule ; et 10 à 100 parties en masse d'un diorganopolysiloxane (A2) qui a deux ou plus de deux groupes alcényle dans les chaînes latérales de la molécule
un organohydrogénopolysiloxane (B) qui a dans une molécule au moins deux atomes d'hydrogène liés au silicium (ce composant est utilisé en une quantité telle que 0,4 à 20 atomes d'hydrogène liés au silicium contenus dans ce composant correspondent à un groupe alcényle dans le composant (A)) ;
10 à 250 parties en masse d'un mélange (C) composé d'eau et d'un épaississant inorganique ;
0,1 à 15 parties en masse d'un émulsionnant (D) ;
un catalyseur de réaction d'hydrosilylation (E) (utilisé en une quantité suffisante pour réticuler la composition) ; et
0,001 à 5 parties en masse d'un retardateur de durcissement (F).

**2.** Composition de caoutchouc siliconé liquide formant une éponge selon la revendication 1, comprenant en outre 20 parties en masse ou moins d'une fine poudre de silice (G) pour 100 parties en masse de composant (A).

**3.** Composition de caoutchouc siliconé liquide formant une éponge selon la revendication 1 ou 2, dans laquelle le composant (C) est un mélange d'eau avec une argile smectite.

**4.** Composition de caoutchouc siliconé liquide formant une éponge selon la revendication 3, dans laquelle l'argile smectite est un matériau composite hydrophile comprenant un polymère organique soluble dans l'eau et une argile smectite.

**5.** Composition de caoutchouc siliconé liquide formant une éponge selon l'une quelconque des revendications 1 à 3, dans laquelle la proportion molaire des atomes d'hydrogène liés au silicium contenus dans le composant (B) pour une mole de groupe alcényle lié au silicium contenu dans le composant (A) est située dans la plage allant de 1,5 à 20.

**6.** Eponge de caoutchouc siliconé obtenue par réticulation et durcissement de la composition de caoutchouc siliconé liquide formant une éponge selon l'une quelconque des revendications 1 à 5.

**7.** Eponge de caoutchouc siliconé selon la revendication 6, dans laquelle le coefficient de retrait après moulage est de 10 % ou moins.

**8.** Eponge de caoutchouc siliconé selon la revendication 7, dans laquelle le diamètre moyen des pores est situé dans la plage allant de 1 $\mu$m à 50 $\mu$m et dans laquelle la porosité continue est supérieure ou égale à 90 %.

**9.** Utilisation de l'éponge de caoutchouc siliconé selon l'une quelconque des revendications 6 à 8 en tant que matériau résilient d'un élément de fixation d'un dispositif de formation d'image.

**10.** Utilisation de l'éponge de caoutchouc siliconé selon la revendication 9, dans laquelle l'élément de fixation susmentionné d'un dispositif de formation d'image est un cylindre ou une courroie.

**EP 2 118 202 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005062534 A
- JP 2002114860 A
- WO 2005085357 A
- EP 1724308 A
- JP 2004346248 A
- US 20070123828 A1